# EUROPÄISCHE PATENTSCHRIFT

(11) **EP 2 433 896 B1**
(45) Veröffentlichungstag und Bekanntmachung des Hinweises auf die Patenterteilung: **19.12.2012**
(21) Anmeldenummer: 11178835.2
(22) Anmeldetag: 25.08.2011
(51) Int. Cl.: B66F 9/075, B60L 11/18

(54) **Flurförderzeug, insbesondere Gegengewichtsgabelstapler**
Industrial truck, in particular counterbalance forklift
Chariot de manutention, en particulier empileuse à fourche à contrepoids

(30) Priorität: 23.09.2010 DE 102010046407
(43) Veröffentlichungstag der Anmeldung: 28.03.2012
(73) Patentinhaber: STILL GmbH, 22113 Hamburg (DE)
(72) Erfinder: Voß, Norbert, 22179 Hamburg (DE)
(74) Vertreter: Geirhos, Johann

(56) Entgegenhaltungen:
- EP-A2- 2 248 758
- DE-A1-102008 004 651

## Beschreibung

Die Erfindung betrifft ein Flurförderzeug, insbesondere Gegengewichtsgabelstapler, mit einem Rahmen und einer innerhalb des Rahmens in einem Batteriefach angeordneten Energieversorgungseinheit, wobei der Rahmen mit einer seitlichen Öffnung versehen ist und die Energieversorgungseinheit durch die seitliche Öffnung in horizontaler Richtung relativ zu dem Batteriefach bewegbar ist, wobei zur Bewegung der Energieversorgungseinheit eine mehrteilige Rollenbahn vorgesehen ist, die einen an einer Bodenfläche des Batteriefachs angeordneten ersten Abschnitt und einen zweiten Abschnitt zum vollständigen Herausbewegen der Energieversorgungseinheit aus dem Batteriefach umfasst, wobei der zweite Abschnitt der Rollenbahn im Bereich der seitlichen Öffnung um eine im Wesentlichen horizontale Schwenkachse zwischen einer eingeklappten Betriebsstellung und einer ausgeklappten Wechselstellung am Flurförderzeug schwenkbar befestigt ist.

Flurförderzeuge mit einem elektrischen Antriebssystem, insbesondere Gegengewichtsgabelstapler, sind insbesondere in jüngerer Zeit häufig mit einer seitlichen Entnahmeöffnung für einen horizontalen Wechsel der Energieversorgungseinheit in seitlicher Richtung und somit in Fahrzeugquerrichtung ausgeführt. Als Energieversorgungseinheit kann hierbei ein Batterieblock, eine Brennstoffzelleneinheit oder eine Hybridantriebseinheit vorgesehen sein. Um die Energieversorgungseinheit zu wechseln, wird die im Flurförderzeug vorhandene Energieversorgungseinheit in horizontaler und seitlicher Richtung vollständig aus dem Batteriefach des Flurförderzeugs neben die seitliche Öffnung heraus bewegt. Die Energieversorgungseinheit kann dann beispielsweise mit einem Hallenkran angehoben und weiter transportiert werden.

Zur horizontalen Bewegung der Energieversorgungseinheit relativ zu dem Batteriefach ist aus dem Stand der Technik bereits bekannt, eine an dem Flurförderzeug angeordnete mehrteilige Rollenbahnen zu verwenden mittels der die Energieversorgungseinheit mit relativ geringem Kraftaufwand in horizontaler Richtung bewegt werden kann. Ein gattungsgemäßes Flurförderzeug mit einer mehrteiligen Rollenbahn für den seitlichen Wechsel der Energieversorgungseinheit ist aus der DE 10 2008 004 651 A1 bekannt.

Die Rollenbahn gemäß der DE 10 2008 004 651 A1 ist als sogenannte Batteriebrücke ausgebildet, die einen an dem Flurförderzeug im Bereich der seitlichen Öffnung zwischen einer eingeklappten Betriebsstellung und einer heruntergeklappten Wechselstellung klappbaren zweiten Abschnitt umfasst. An dem klappbaren zweiten Abschnitt der Rollenbahn, auf dem die Energieversorgungseinheit aus dem Batteriefach heraus- bzw. hineingerollt werden kann, ist ein klappbares Anschlagelement angeordnet, das in einer ausgeklappten Stellung die Endstellung der vollständig außerhalb des Batteriefachs befindlichen Energieversorgungseinheit festlegt und verhindert, dass die Energieversorgungseinheit beim Herausziehen aus dem Batteriefach über die ausgeklappte Batteriebrücke hinausrollt. Das klappbare Anschlagelement ist hierbei bei in der heruntergeklappten Wechselstellung befindlichem zweiten Abschnitt der Rollenbahn von der eingeklappten Stellung in die ausgeklappte Stellung zu verstellen, um die Energieversorgungseinheit aus dem Batteriefach herausrollen zu können bzw. nach dem Hineinrollen der Energieversorgungseinheit in das Batteriefach von der ausgeklappten Stellung in die eingeklappte Stellung zu verstellen, um den zweiten Abschnitt der Rollenbahn von der Wechselstellung in die Betriebsstellung einklappen zu können.

Das zum Klappen des Anschlagelements erforderliche Schwenk- bzw. Drehgelenk verursacht jedoch einen hohen Bauaufwand und führt zu hohen Herstellkosten der Batteriebrücke. Zudem ergibt sich ein ergonomisch ungünstiger Betrieb, da von einer Batterieperson in einer gebückten Haltung das Anschlagelement aus- bzw. eingeklappt werden muss, da das Anschlagelement zum Herausrollen der Energieversorgungseinheit aus dem Batteriefach bei heruntergeklapptem und in der Wechselstellung befindlichem zweiten Abschnitt der Rollenbahn ausgeklappt und nach dem Hineinrollen der Energieversorgungseinheit in das Batteriefach eingeklappt werden muss, bevor der zweite Abschnitt der Rollenbahn in die Betriebsstellung eingeklappt werden kann.

Der vorliegenden Erfindung liegt die Aufgabe zugrunde, ein Flurförderzeug der eingangs genannten Gattung zur Verfügung zu stellen, bei dem ein Anschlagelement einen geringen Bauaufwand verursacht und ein ergonomisch günstiger Betrieb beim Wechsel der Energieversorgungseinheit erzielbar ist.

Diese Aufgabe wird erfindungsgemäß dadurch gelöst, dass der zweite Abschnitt der Rollenbahn mit einem Anschlagelement versehen ist, das an dem zweiten Abschnitt der Rollenbahn zwischen einer eingeschobenen Stellung und einer ausgezogenen Stellung in Längsrichtung des zweiten Abschnitts längsverschiebbar und teleskopierbar angeordnet ist, und in der ausgezogenen Stellung die Endstellung der sich außerhalb des Batteriefachs befindlichen Energieversorgungseinheit festlegt. Bei der erfindungsgemäßen Rollenbahn ist das Anschlagelement an dem von der Batteriebrücke gebildeten klappbaren zweiten Abschnitt der Rollenbahn in Längsrichtung längsverschiebbar angeordnet, so dass das Anschlagelement teleskopierbar an dem zweiten Abschnitt der Rollenbahn angeordnet ist und eine teleskopierbaren Batterieanschlag bildet, der die Endstellung der teilweise oder vollständig aus dem Batteriefach befindlichen Energieversorgungseinheit festlegt. Die Längsführung des Anschlagelements kann hierbei auf einfache Weise erfolgen, indem das Anschlagelement in einem entsprechenden Führungskanal an dem zweiten Abschnitt der Rollenbahn angeordnet und geführt ist. Eine derartige Längsführung ist ohne aufwändige Gleit- und Schwenklager erzielbar, so dass die Längsführung des teleskopierbaren Anschlagelements einen geringen Bauaufwand verursacht. Weiterhin kann das längsverschiebbare Anschlagelement beim Herausrollen der Energieversorgungseinheit aus dem Batteriefach durch die Bewegung der Energieversorgungseinheit von der eingeschobenen Stellung in die ausgezogenen Stellung mitbewegt wird, so dass keine zusätzlichen Bedienschritte zum Betätigen des Anschlagelements beim Ausbau der Energieversorgungseinheit aus dem Batteriefach in die ausgezogene Stellung erforderlich sind. Der Wechsel der Energieversorgungseinheit wird hierdurch zudem beschleunigt. Das Einschieben des Anschlagelements in die eingeschobene Position nach dem Einbau der Energieversorgungseinheit in das Batteriefach kann in der eingeklappten und somit hochgeklappten Stellung des zweiten Abschnitts der Rollenbahn erfolgen, so dass sich ein ergonomischer Betrieb erzielen lässt, bei dem das Anschlagelement ohne Bücken der Bedienperson beim Wechsel der Energieversorgungseinheit verstellt werden kann.

Gemäß einer bevorzugten Ausführungsform der Erfindung ist das Anschlagelement zwischen einem inneren Anschlag für die eingeschobene Stellung und einem äußeren Anschlag für die ausgezogene Stellung teleskopierbar an dem zweiten Abschnitt längsverschiebbar, wobei sich das Anschlagelement in der eingeschobenen Stellung im Wesentlichen innerhalb der Längserstreckung des zweiten Abschnitts befindet und in der ausgezogenen Stellung das der Schwenkachse gegenüberliegende Ende des zweiten Abschnitts der Rollenbahn in Längsrichtung überragt. Durch den äußeren Anschlag für die ausgeschobene Position kann auf einfache Weise die Endstellung der Energieversorgungseinheit seitlich neben dem Batteriefach festgelegt werden und die Bewegung der Energieversorgungseinheit gestoppt werden. Das teleskopierbare Anschlagelement weist hierbei in der eingeschobenen Stellung keinen zusätzlichen Bauraumbedarf auf und ermöglicht in der ausgezogenen Stellung, dass die Energieversorgungseinheit vollständig aus dem Batteriefach herausbewegt werden kann.

Sofern gemäß einer bevorzugten Ausführungsform der Erfindung an dem Anschlagelement ein Handgriff angeordnet ist, kann nach dem Einschieben der Energieversorgungseinheit in das Batteriefach auf einfache und sichere Weise das in der ausgezogenen Stellung befindliche Anschlagelement in die eingeschobene Stellung betätigt werden.

Besondere Vorteile ergeben sich, wenn gemäß einer vorteilhaften Ausgestaltungsform der Erfindung das Anschlagelement mit einem Auszugschlitten in Wirkverbindung ist, der beim Herausbewegen der Energieversorgungseinheit aus dem Batteriefach von dem inneren Anschlag zu dem äußeren Anschlag in dem zweiten Abschnitt teleskopierbar mitbewegbar ist. Mit einem Auszugschlitten, auf dem das Anschlagelement montiert ist, kann auf einfache Weise die Teleskopierbarkeit des Anschlagelement erzielt werden, so dass das Anschlagelement durch die Bewegung der Energieversorgungseinheit beim Ausbau aus dem Batteriefach automatisch zum äußeren Anschlag für die ausgezogene Stellung mitbewegt werden.

Der äußere Anschlag für die ausgezogene Stellung des Anschlagelements kann mit geringem Bauaufwand zwischen dem Anschlagelement bzw. dem Auszugschlitten und dem zweiten Abschnitt gebildet werden, beispielsweise durch einen entsprechenden an dem Auszugschlitten angeordneten Mitnehmer, der an dem zweiten Abschnitt anschlägt.

Das Anschlagelement ist gemäß einer vorteilhaften Ausgestaltungsform der Erfindung von mindestens einem Längsträger gebildet, der in einem Führungskanal des zweiten Abschnitts der Rollenbahn längsverschiebbar gelagert ist. Mit einem derartigen an dem zweiten Abschnitt längsverschiebbar angeordneten Längsträger kann mit geringem Bauaufwand ein teleskopierbarer Auszugschlitten gebildet werden. Durch entsprechende Gestaltung des Führungskanals und des Längsträgers kann hierbei eine einfach aufgebaute Linearführung des Längsträgers in dem zweiten Abschnitt erzielt werden, so dass ohne Gleit- und Lagerelemente ein einfach aufgebauter Auszugschlitten hergestellt werden kann.

Gemäß einer bevorzugten Weiterbildung der Erfindung ist das Anschlagelement im Bereich eines Anschlagmittels für die Energieversorgungseinheit mit einer Verriegelungsausnehmung versehen, die in der eingeklappten Stellung des zweiten Abschnitts der Rollenbahn und in einer angrenzend an die eingeschobenen Stellung ausgebildeten Verriegelungsstellung des Anschlagelements eine Verriegelung des eingeklappten zweiten Abschnitts an der Energieversorgungseinheit ermöglicht. Mit einer derartigen Verriegelungsausnehmung kann der zweite Abschnitt der Rollenbahn in der eingeklappten Stellung auf einfache Weise an der im Batteriefach befindlichen Energieversorgungseinheit verriegelt werden. Hierzu ist lediglich angrenzend an den inneren Anschlag für die eingeschobene Stellung ein Verriegelungsbereich auszubilden, in den der Auszugschlitten bzw. das Anschlagelement eingeschoben werden kann. Hierdurch kann eine einfache Verriegelung des zweiten Abschnitts der Rollenbahn in der eingeklappten Betriebsstellung ohne zusätzliche Verriegelungsmittel erzielt werden.

Bevorzugt ist gemäß einer vorteilhaften Weiterbildung der Erfindung der zweite Abschnitt der Rollenbahn mit einem Stützelement versehen, das an dem zweiten Abschnitt der Rollenbahn an dem der Schwenkachse gegenüberliegende Bereich schwenkbar, insbesondere um eine im Wesentlichen horizontale Schwenkachse klappbar, angeordnet ist. Mit einem derartigen Stützelement, das zwischen einer eingeklappten Stellung und einer ausgeklappten Abstützstellung am Ende des zweiten Abschnitts schwenkbar angeordnet ist, kann der ausgeklappte zweite Abschnitt in der Wechselstellung auf einfache Weise auf der Fahrbahnoberfläche abgestützt werden, wodurch das Stützelement während des Wechsels der Energieversorgungseinheit das Gewicht der Energieversorgungseinheit zumindest teilweise direkt auf der Fahrbahn abstützt. Hierdurch wird auf einfache Weise ein sicherer Wechsel der Energieversorgungseinheit erzielt.

Bevorzugt ist das Stützelement in einer ausgeklappten Abstützstellung mittels einer Verriegelungseinrichtung an dem zweiten Abschnitt der Rollenbahn verriegelbar. Hierdurch kann die Betriebssicherheit beim Wechsel der Energieversorgungseinheit weiter erhöht werden, da durch eine Verriegelung des Stützelements ein Einklappen des Stützelements in der ausgeklappten Wechselstellung des zweiten Abschnitts wirksam vermieden werden kann.

Eine einfach aufgebaute und kostengünstige Verriegelungseinrichtung ist erzielbar, wenn gemäß einer bevorzugten Ausgestaltungsform der Erfindung das Stützelement mit einer Abstützstrebe versehen ist, die in einer ausgeklappten Abstützstellung des Stützelement mittels eines Rasthakens in einer Rastausnehmung des zweiten Abschnitts der Rollenbahn verriegelnd einrastet.

Sofern zum Einklappen des Stützelements gemäß einer bevorzugten Ausführungsform der Erfindung die Verriegelungseinrichtung mit einer Entriegelungsvorrichtung entriegelbar ist, kann zum Einklappen des Stützelements die Verriegelungseinrichtung auf einfache und sichere Weise gelöst werden.

Hinsichtlich einer einfachen und sicheren Betätigung der Entriegelungsvorrichtung ergeben sich Vorteile, wenn die Entriegelungsvorrichtung gemäß einer vorteilhaften Ausführungsform einen Entriegelungsknopf umfasst, der mit der Abstützstrebe in Wirkverbindung steht.

Besondere Vorteile hinsichtlich eines sicheren Betriebs beim Einklappen des Stützelements ergeben sich, wenn gemäß einer Ausführungsform der Erfindung zum Lösen der Verriegelungseinrichtung eine Zweihandbetätigung vorgesehen ist, wobei das Stützelement mit einer Hand in der ausgeklappten Stellung gehalten werden muss, um durch eine Entlastung der Abstützstrebe bei einer Betätigung des Entriegelungsknopfes mit der zweiten Hand die Rastverbindung zu lösen.

Mit besonderem Vorteil ist an dem Stützelement eine Handhabungseinrichtung, insbesondere ein Gurtband, angeordnet. Mit einer derartigen Handhabungseinrichtung am Stützelement kann auf einfache Weise das Stützelement ausgeklappt und beim Einklappen gehalten werden. Da das Stützelement in der ausgeklappten Stellung verriegelt ist, kann über die Handhabungseinrichtung ebenfalls auf einfache Weise der zweite Abschnitt der Rollenbahn von der eingeklappten Betriebsstellung in die ausgeklappte Wechselstellung ausgeklappt bzw. von der ausgeklappten Wechselstellung in die eingeklappte Betriebsstellung hochgeschwenkt werden.

Sofern gemäß einer bevorzugten Weiterbildung der Erfindung in der eingeschobenen Stellung bzw. der Verriegelungsstellung des Anschlagelements und in der eingeklappten Stellung des Stützelements zwischen dem Stützelement und dem Anschlagelement eine Verriegelung gebildet ist, die ein Ausziehen des Anschlagelements in Richtung der ausgezogenen Stellung verhindert, kann die Betriebssicherheit weiter erhöht und die Gefahr von Fehlbedienungen verringert werden, da der zweite Abschnitt nur in die Wechselstellung abklappbar ist und das Anschlagelement nur teleskopierbar bewegbar ist, wenn das Stützelement zuvor in die Abstützstellung ausgeklappt wurde.

Die Verriegelung kann mit geringem Bauaufwand gebildet werden, wenn diese eine Aussparung in dem Anschlagelement bzw. dem Auszugschlitten umfasst, in die das eingeklappte Stützelement mit einem Fortsatz eingreift. Mit einer derartigen formschlüssigen Verriegelung kann in der eingeklappten Stellung des Stützelements eine Längsbewegung des teleskopierbaren Anschlagelements verhindert werden.

Der innere Anschlag für die eingeschobene Stellung des Anschlagelements ist auf einfache und kostengünstige Weise zwischen dem Anschlagelement bzw. dem Auszugschlittern und dem ausgeklappten Stützelement ausgebildet.

Sofern der innere Anschlag eine Anschlagfläche an dem Stützelement umfasst, an der das Anschlagelement bzw. der Auszugschlitten mit einem Fortsatz anschlägt, ergibt sich ein geringer Bauaufwand und Herstellaufwand für den inneren Anschlag des teleskopierbaren Anschlagelements.

Gemäß einer vorteilhaften Weiterbildung der Erfindung ist an dem zweiten Abschnitt der Rollenbahn ein Positioniermittel zur seitlichen Führung der Energieversorgungseinheit angeordnet. Mit einem derartigen Positioniermittel, das die Funktion eines seitlichen Anschlags für die Energieversorgungseinheit aufweist, kann beim Aufsetzen einer Energieversorgungseinheit auf den in der Wechselstellung befindlichen zweiten Abschnitt der Rollenbahn die Energieversorgungseinheit auf einfache Weise exakt positioniert und präzise ausgerichtet werden, um ein Hineinschieben der Energieversorgungseinheit in das Batteriefach zu erleichtern sowie ein Verkanten der Energieversorgungseinheit beim Hineinschieben in das Batteriefach zu vermeiden, wodurch Beschädigungen beim Hineinschieben der Energieversorgungseinheit an dem Flurförderzeug sowie der Energieversorgungseinheit durch Anstoßen an ein Gegengewicht oder ein vorderes Rahmenblech des Batteriefachs auf einfache Weise vermieden werden können. Gemäß einer bevorzugten Ausführungsform der Erfindung ist das Positioniermittel von einem ein- und ausklappbaren Anschlagblech gebildet, das an einer Seite des zweiten Abschnitts um eine sich in Längsrichtung des zweiten Abschnitts erstreckende Klappachse klappbar angeordnet ist. Ein derartiges ein- und ausklappbares Anschlagblech weist eine geringen Bauaufwand auf und ermöglicht in der ausgeklappten Stellung eine exakte Positionierung der Energieversorgungseinheit beim Absetzen auf den in die Wechselstellung ausgeklappten zweiten Abschnitt der Rollenbahn.

Weitere Vorteile und Einzelheiten der Erfindung werden anhand des in den schematischen Figuren dargestellten Ausführungsbeispiels näher erläutert. Hierbei zeigt
- Figur 1: das Batteriefach eines erfindungsgemäßen Flurförderzeugs in einer perspektivischen Darstellung mit einem in der Betriebsstellung befindlichen zweiten Abschnitt der Rollenbahn und einem in einer Verriegelungsstellung befindlichen Anschlagelement,
- Figur 2: den zweiten Abschnitt der Rollenbahn mit ausgeklapptem und verriegeltem Stützelement und einem an einem inneren Anschlag befindlichen Anschlagelement,
- Figur 3: den zweiten Abschnitt der Rollenbahn in der heruntergeklappten
- Figur 4: Wechselstellung mit ausgeklapptem Positioniermittel, eine Energieversorgungseinheit in der vollständig außerhalb des Batteriefachs befindlichen Wechselstellung und dem an einem äußeren Anschlag befindlichen Anschlagelement,
- Figur 5: den zweiten Abschnitt der Rollenbahn in der heruntergeklappten Wechselstellung mit eingeklapptem Positioniermittel und am inneren Anschlag befindlichen Anschlagelement,
- Figur 6: einen Ausschnitt der Figur 1 in einer vergrößerten Darstellung.

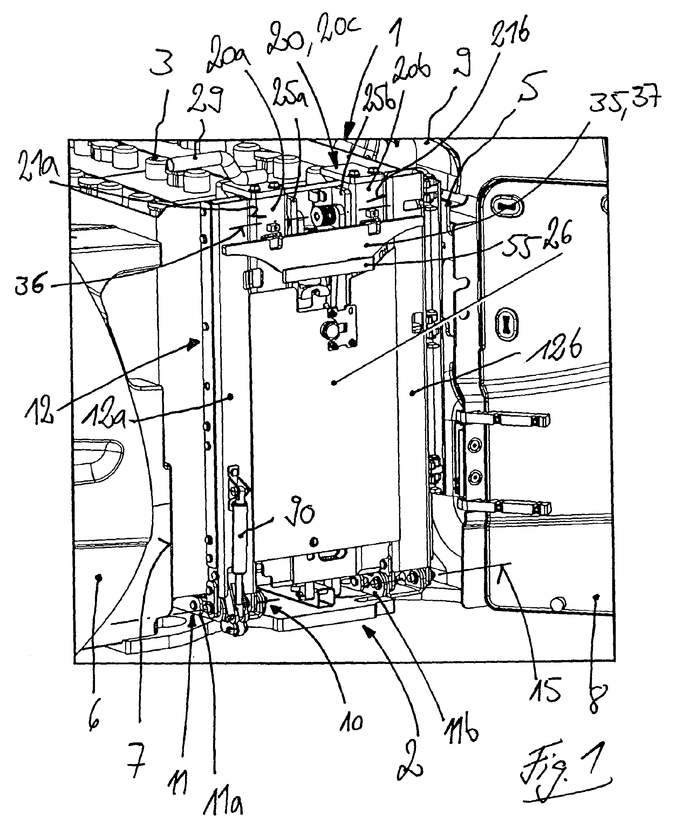

In der Figur 1 ist ein mittlerer Rahmenabschnitt eines Rahmens 1 eines erfindungsgemäßen, beispielsweise als Gegengewichts-Gabelstapler ausgebildeten Flurförderzeugs dargestellt. Der Rahmenabschnitt des Rahmens 1 ist mit einem sogenannten Batteriefach 2 zur Aufnahme einer im vorliegenden Ausführungsbeispiel als Batterieblock ausgebildeten Energieversorgungseinheit 3 versehen. Es ist jedoch ebenfalls die Ausbildung der Energieversorgungseinheit als Brennstoffzelleneinheit oder als Hybrideinheit möglich.

Das Batteriefach 2 ist in Fahrzeuglängsrichtung nach vorne durch ein vorderes Rahmenblech 5 und nach hinten durch ein hinters Rahmenblech bzw. ein Gegengewicht 6 begrenzt. Nicht mehr dargestellt ist ein an der linken Fahrzeugseite befindliches seitliches Rahmenblech, das das Batteriefach 2 zur linken Fahrzeugseite begrenzt.

Der Rahmenabschnitt 1 ist an der rechten Fahrzeugseite mit einer seitlichen Öffnung 7 für einen Wechsel der Energieversorgungseinheit 3 in horizontaler Richtung versehen.

Dargestellt ist weiterhin eine Batteriefachtür 8, die sich in den Figuren in einer offenen Stellung zum Wechsel der Energieversorgungseinheit 3 befindet und in einer geschlossenen Stellung die seitliche Öffnung 7 abdeckt. Nach oben ist das Batteriefach 2 durch eine klappbare Haube 9 abgedeckt.

Zur horizontalen Bewegung der Energieversorgungseinheit relativ zu dem Batteriefach 2 ist eine mehrteilige Rollenbahn 10 vorgesehen, die einen ersten Abschnitt 11 aufweist, der an einer plattenartigen Bodenfläche des Rahmenabschnitts befestigt ist, beispielsweise mittels entsprechender Dämpfungselemente. Die Rollenbahn 10 umfasst weiterhin einen zweiten Abschnitt 12, um die Energieversorgungseinheit 3 in seitlicher Richtung und somit in Fahrzeugsquerrichtung teilweise oder bevorzugt vollständig aus dem Batteriefach 2 zu bewegen.

Der zweite Abschnitt der Rollenbahn 12 ist an dem ersten Abschnitt 11 der Rollenbahn 10 bzw. an dem mittleren Rahmenabschnitt des Rahmens 1 um eine horizontale Schwenkachse 15 schwenkbar befestigt. Die horizontale Schwenkachse 15 ist hierbei parallel zur Fahrzeuglängsachse angeordnet und an dem der seitlichen Öffnung 7 zugewandten Ende des ersten Abschnitts 11 angeordnet.

Der erste Abschnitt 11 der Rollenbahn 10 ist hierbei von jeweils zwei in Fahrzeuglängsrichtung und somit seitlich beabstandeten Trägern 11a, 11b gebildet, die jeweils mit mehreren Rollen versehen sind.

Der klappbare zweite Abschnitt 12 der Rollenbahn 10 bildet eine Batteriebrücke und besteht aus zwei in Fahrzeuglängsrichtung und somit seitlich beabstandeten Trägern 12a, 12b, die jeweils mit mehreren Rollen 16 versehen sind.

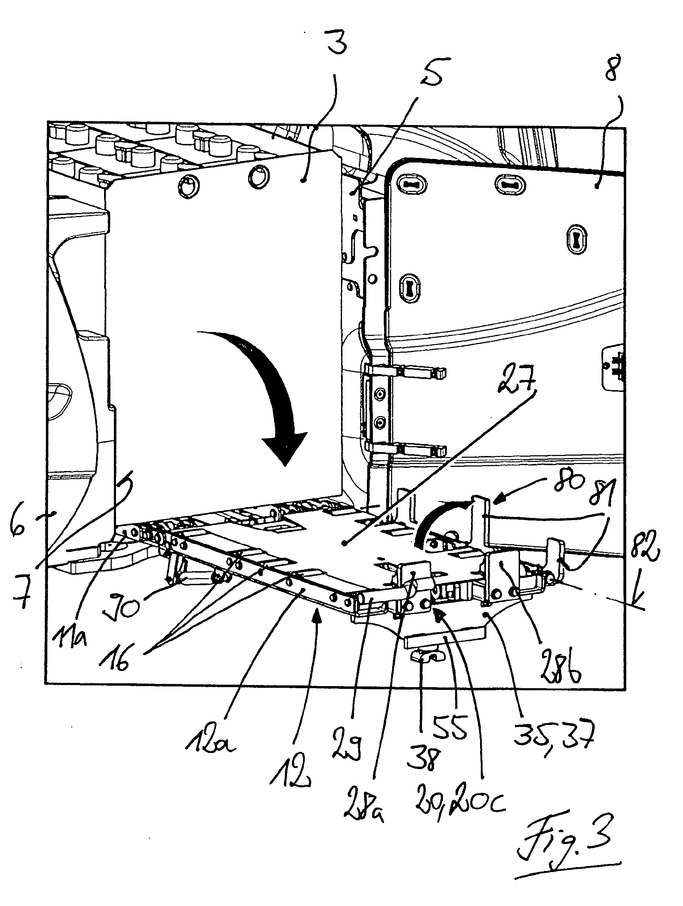

Der zweite Abschnitt 12 ist zwischen einer in der Figur 1 gezeigten hochgeklappten Betriebsstellung, in der der zweite Abschnitt 12 im Wesentlichen senkrecht angeordnet ist und an einer Seitenwand der Energieversorgungseinheit 3 anliegt, und einer in den Figuren 3 bis 5 dargestellten ausgeklappten Wechselstellung um die Schwenkachse 15 klappbar, in der der zweite Abschnitt 12 im wesentlichen horizontal und in Verlängerung des ersten Abschnitts 11 angeordnet ist.

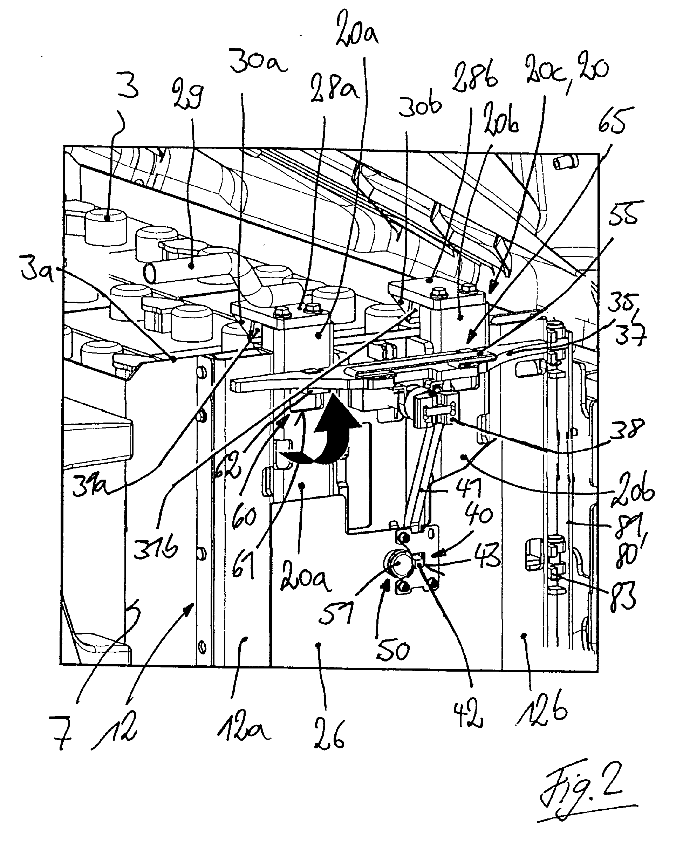

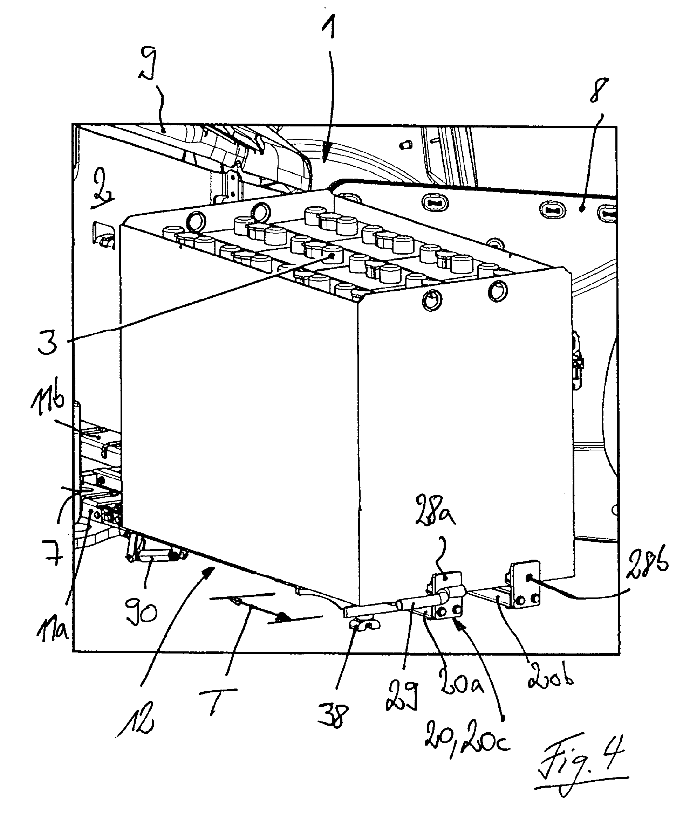

Erfindungsgemäß ist der zweite Abschnitt 12 der Rollenbahn 10 mit einem Anschlagelement 20 versehen, das an dem zweiten Abschnitt 12 der Rollenbahn 10 zwischen einer in der Figur 2 dargestellten eingeschobenen Stellung und einer in der Figur 4 dargestellten ausgezogenen Stellung in Längsrichtung des zweiten Abschnitts 12 längsverschiebbar und teleskopierbar angeordnet ist.

Das teleskopierbare Anschlagelement 20 besteht im dargestellten Ausführungsbeispiel von zwei in Fahrzeuglängsrichtung und somit seitlich beabstandeten Längsträgern 20a, 20b, die in jeweils einem entsprechenden Führungskanal 21a, 21b des zweiten Abschnitts 12 längverschiebbar angeordnet sind und einen Auszugschlitten 20c bilden. Die Längsträger 20a, 20b sind bevorzugt von rechteckförmigen Kastenprofilen oder nach oben bzw. unten offenen U-Profilen gebildet. Die Führungskanäle 21a bzw. 21b sind im dargestellten Ausführungsbeispiel in seitlicher Richtung jeweils von der inneren Seitenfläche eines Trägers 12a bzw. 12b des zweiten Abschnitts 12 und einem beabstandet angeordneten Führungsblech 25a bzw. 25b an dem zweiten Abschnitt 12 gebildet. Nach unten sind die Führungskanäle 21a, 21b von einer unteren Bodenplatte 26 des zweiten Abschnitts 12 begrenzt. Entsprechend erfolgt die Begrenzung der Führungskanäle 21a, 21b nach oben durch eine obere Abdeckplatte 27 des zweiten Abschnitts 12. Der von den Längsträger 20a bzw. 20b gebildete Auszugschlitten 20c befinden sich somit innerhalb der Höhenerstreckung der Träger 12a, 12b des zweiten Abschnitts 12 und ist in Fahrzeuglängsrichtung zwischen den Trägern 12a, 12b des zweiten Abschnitts 12 der Rollenbahn 10 angeordnet. Die beiden Längsträgern 20a, 20b sind auf nicht näher dargestellte Weise miteinander verbunden, so dass die beiden Längsträger 20a, 20b den Auszugschlitten 20c bilden und gemeinsam betätigt und in Längsrichtung des zweiten Abschnitts 12 verschoben werden können.

Anstelle der beiden Längsträger 20a, 20b ist ebenfalls möglich, das teleskopierbare Anschlagelement 20 von lediglich einem in einem entsprechenden Führungskanal längsverschiebbar angeordneten Längsträger zu bilden.

An dem aus dem Führungskanal 21a bzw. 21b herausragenden Ende ist an dem Längsträger 21a bzw. 21b ein über das Niveau der von den Rollen 16 gebildeten Rollenbahn herausragendes Anschlagblech als Anschlagmittel 28a, 28b für die Energieversorgungseinheit 3 angeordnet. Die Anschlagmittel 28a, 28b des Anschlagelements 20 legen hierbei die Endposition der Energieversorgungseinheit 3 fest.

Zur Betätigung des Anschlagelements 20 ist an dem Längsträger 20a bzw. Anschlagmittel 28a ein Handgriff 29 angeordnet, mit dem die beiden Längsträger 20a, 20b und somit der Auszugschlitten 20c zwischen der eingeschobenen Stellung und der ausgezogenen Stellung betätigt werden können.

An der Innenseite der Anschlagbleche ist jeweils beabstandet zum Niveau der Rollenbahn eine ebenfalls das Anschlagmittel 28a, 28b bildende Haltenase 30a, 30b angeordnet, die in dem Anschlagmittel 28a, 28b eine Verriegelungsausnehmung 31a, 31b bilden, mit der das Anschlagelement 20 in der hochgeklappten Stellung des zweiten Abschnitts 12 und in einer Verriegelungsstellung des Anschlagelements 20 den oberen Rand 3a der Seitenwand der Energieversorgungseinheit 3, beispielsweise eines Batterietrogs des Batterieblocks, hintergreift. Der zweite Abschnitt 12 der Rollenbahn 10 kann dadurch in der eingeklappten Betriebsstellung an der Energieversorgungseinheit 3 verriegelt werden. Die Verriegelungsstellung ist hierbei angrenzend an einen inneren Anschlag des Anschlagelements 20 ausgebildet und kann durch Einschieben des Anschlagelements 20 über den inneren Anschlag erreicht werden. In der Figur 1 ist die Verriegelungsstellung des Anschlagelements 20 dargestellt.

An dem der Schwenkachse 15 gegenüberliegenden Ende des zweiten Abschnitts 12 der Rollenbahn ist weiterhin ein Stützelement 35 angeordnet, das um eine horizontale und in Fahrzeuglängsrichtung orientierte Schwenkachse 36 schwenkbar am zweiten Abschnitt 12 der Rollenbahn 10 befestigt ist. Das Stützelement 35 besteht aus einer plattenförmigen Stützstrebe 37, die zwischen den Führungsblechen 25a bzw. 25b um die Schwenkachse 36 zwischen einer in der Figur 1 eingeklappten Stellung und einer in der Figur 2 dargestellten ausgeklappten Abstützstellung schwenkbar befestigt ist. An der Stützstrebe 37 ist ein Abstützelement 38, beispielsweise ein Stützfuß, höhenverstellbar angeordnet.

Das Stützelement 35 ist in der ausgeklappten Abstützstellung mittels einer Verriegelungseinrichtung 40 an dem zweiten Abschnitt 12 verriegelbar. Die Verriegelungseinrichtung 40 umfasst eine an dem Stützelement 35 dreh- bzw. schwenkbar befestigte Abstützstrebe 41, die an einem Ende mit einem Rasthaken 42 versehen ist, der - wie in der Figur 2 dargestellt ist - in der ausgeklappten Abstützstellung des Stützelement 35 in eine Rastausnehmung 43 an der Bodenplatte 26 des zweiten Abschnitts 12 zur Verriegelung des ausgeklappten Stützelements 35 eingreift.

Zum Einklappen des in der Abstützstellung befindlichen Stützelements 35 ist eine Entriegelungsvorrichtung 50 vorgesehen, die einen an der Bodenplatte 26 des zweiten Abschnitts angeordneten Entriegelungsknopf 51 umfasst, der mit der Abstützstrebe 41 in Wirkverbindung steht, um den Rasthaken 42 aus der Rastausnehmung 43 zum Einklappen des Stützelement 35 zu beaufschlagen.

Zur Handhabung des Stützelements 35 ist an der Außenseite der Stützstrebe 37 eine von einem Gurtband gebildete Handhabungseinrichtung 55 vorgesehen.

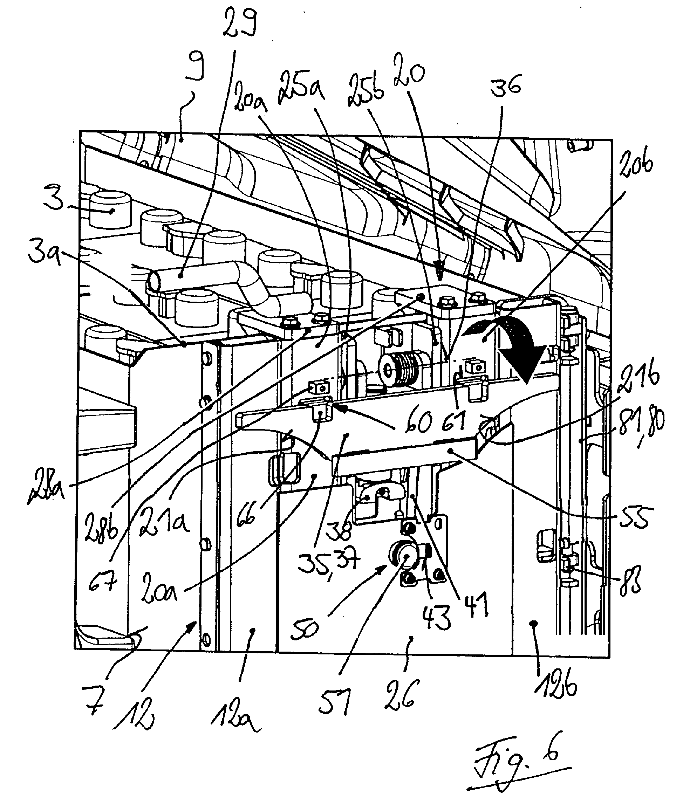

Wie aus den Figuren 1 und 6 ersichtlich ist, ist bei in der Verriegelungsstellung befindlichem Anschlagelement 20 und der eingeklappten Stellung des Stützelements 35 zwischen dem Stützelement 35 und dem Anschlagelement 20 eine Verriegelung 60 gebildet ist, die ein Ausziehen des Anschlagelements 20 in Richtung der ausgezogenen Stellung verhindert.

Die Verriegelung 60 ist als formschlüssige Verriegelung ausgebildet und ist von jeweils einer Aussparung 61 an der Unterseite des Längsträgers 20a, 20b gebildet, in die in der eingeklappten Stellung des Stützelements 35 ein an der Innenseite der Stützstrebe 37 angeordneter Fortsatz 62 eingreift.

Aus der Figur 2 ist weiter ersichtlich, dass zwischen dem Anschlagelement 20 und dem in der ausgeklappten Abstützstellung befindlichen Stützelement 35 ein innerer Anschlag 65 für die eingeschobene Stellung des Anschlagelements 20 gebildet ist.

Der innere Anschlag 65 ist als formschlüssiger Anschlag ausgebildet und umfasst jeweils eine Anschlagfläche 66 an der Außenseite der Stützstrebe 37, an der die Längsträgers 20a, 20b mit einem an der Unterseite der den Auszugschlitten 20c bildenden Längsträger 20a, 20b angeordneten Fortsatz 67 anschlagen.

Ein äußerer Anschlag, der die ausgezogene Stellung des Anschlagmittels 20, die in der Figur 4 dargestellt ist, festlegt, ist auf nicht näher dargestellte Weise von einem formschlüssigen Anschlag zwischen den Längsträgern 20a, 20b und den Führungskanälen 21a, 21b des zweiten Abschnitts 12 gebildet.

Weiterhin ist an dem zweiten Abschnitt 12 der Rollenbahn 10 ein Positioniermittel 80 angeordnet, das zur seitlichen Führung der Energieversorgungseinheit 3 dient und beim Abstellen einer Energieversorgungseinheit 3 auf dem ausgeklappten zweiten Abschnitt 12 einen Anschlag in Fahrzeuglängsrichtung bildet, um die Ausrichtung der Energieversorgungseinheit 3 zum Hineinschieben in das Batteriefach 2 zu erleichtern

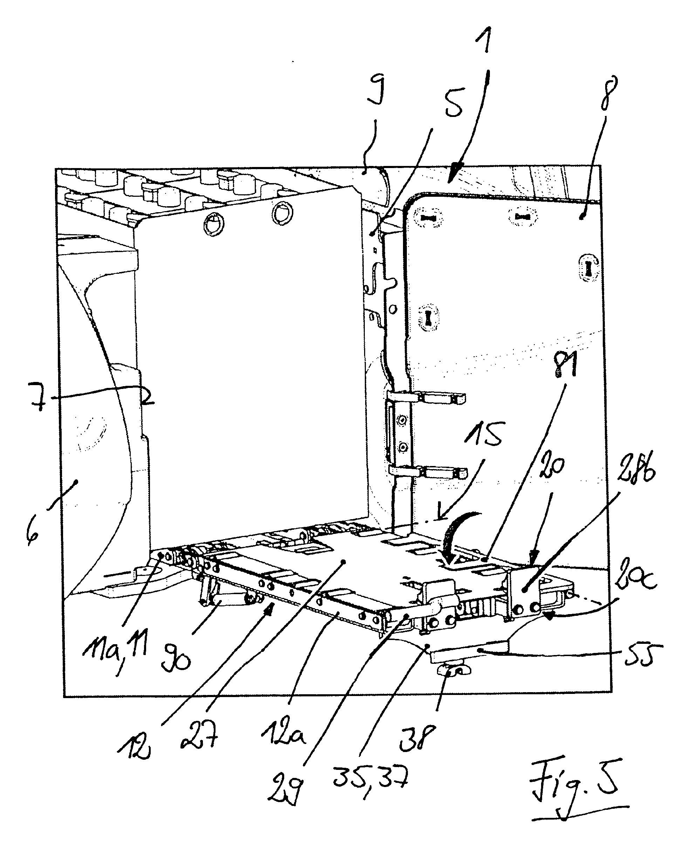

Das Positioniermittel 80 ist im dargestellten Ausführungsbeispiel von einer ein- und ausklappbaren Anschlagplatte 81 gebildet ist, die an einer Seite des zweiten Abschnitts 12 um eine sich in Längsrichtung des zweiten Abschnitts 12 erstreckende Klappachse 82 klappbar angeordnet ist. In der Figur 3 ist eine ausgeklappte Stellung des Positioniermittels 80 dargestellt, in der das Positioniermittel 80 das Ausrichten und Abstellen einer Energieversorgungseinheit 3 auf dem ausgeklappten und in der Wechselstellung befindlichen zweiten Abschnitt 12 erleichtert. In der Figur 5 ist das Positioniermittel 80 in einer eingeklappten Stellung dargestellt. Die obere Abdeckplatte 27 des zweiten Abschnitts 12 ist mit Aussparungen versehen, in die die Anschlagplatte 81 mit entsprechenden Anschlagflächen in der eingeklappten Stellung angeordnet ist, so dass die Anschlagplatte 81 in der eingeklappten Stellung bündig in der Abdeckplatte 27 des zweiten Abschnitts 12 angeordnet ist. In den Figuren 2 und 6 sind an dem zweiten Abschnitt 12 angeordnete Anschlagnasen dargestellt, an denen das im vorliegenden Ausführungsbeispiel als Winkelblech ausgebildete Positioniermittel 80 in der ausgeklappten Stellung anschlägt, um einen Anschlag für die ausgeklappte Stellung zu bilden.

Zum Herausziehen einer in dem Batteriefach 2 befindlichen Energieversorgungseinheit 3 muss der die Batteriebrücke bildenden zweiten Abschnitt 12 von der in der Figur 1 dargestellten eingeklappten Batteriestellung in die in der Figur 3 dargestellte Wechselstellung ausgeklappt werden. Hierzu kann von der Bedienperson das Stützelement 35 mittels der Handhabungseinrichtung 55 von der in der Figur 1 dargestellten eingeklappten Stellung - wie mit dem Pfeil in der Figur 2 verdeutlicht ist - in die in der Figur 2 dargestellte ausgeklappte Abstützstellung betätigt werden. In der ausgeklappten Abstützstellung wird durch Einrasten des Rasthakens 42 der Abstützstrebe 41 in die Rastausnehmung 43 das Stützelement 35 automatisch an dem zweiten Abschnitt 12 verriegelt.

Hierbei kann von der Bedienperson in ergonomisch günstiger Weise und bei hochgeklapptem zweiten Abschnitt 12 über den Handgriff 29 das von den beiden Längsträgern 20a, 20b gebildete Anschlagelement 20 von der Verriegelungsstellung gemäß der Figur 1, in der das Anschlagelement 20 mit der Verriegelungsausnehmung 31a, 31b die obere Kante 3a der Seitenwand der Energieversorgungseinheit 3 hintergreift, in die eingeschobene Stellung gemäß der Figur 2 längsverstellt und herausgezogenen werden, in der das Anschlagelement 20 den Rand des Batterieblocks 3 freigibt und mit den Fortsätzen 67 an den Anschlagflächen 66 des ausgeklappten Stützelements 35 anliegt und sich somit am inneren Anschlag 65 befindet.

Anschließend kann der zweite Abschnitt 12 über die Handhabungseinrichtung 55 von der eingeklappten Betriebsstellung - wie in der Figur 3 durch den Pfeil verdeutlicht - in die in der Figur 3 dargestellte heruntergeklappte Wechselstellung betätigt werden, in der sich der zweite Abschnitt 12 der Rollenbahn 10 in Verlängerung des ersten Abschnitts 11 der Rollenbahn 10 erstreckt und über das ausgeklappte und verriegelte Stützelement 35 am drehachsenfernen Bereich auf der Fahrbahnoberfläche abstützt.

Anschließend kann das Positioniermittel 80 um die Klappachse 82 wie in der Figur 3 durch den entsprechende Pfeil verdeutlicht ist, ausgeklappt werden, um den entsprechenden seitlichen Anschlag und die seitliche Führung für die von dem Batterieblock gebildete Energieversorgungseinheit 3 zu bilden.

Anschließend kann die als Batterieblock ausgebildete Energieversorgungseinheit 3 auf der Rollenbahn 10 aus dem Batteriefach 2 herausgezogen werden. Hierbei gelangt die Energieversorgungseinheit 3 an die Haltenasen 30a, 30b des am inneren Anschlags befindlichen Anschlagelements 20, wobei durch den von den Längsträgern 20a, 20b, die in den Führungskanälen 21a, 21b angeordnet und geführt sind, gebildeten Auszugschlitten 20c das Anschlagelement 20 bei der Bewegung der Energieversorgungseinheit 3 im Sinne eines teleskopierbaren Anschlags von dem inneren Anschlag für die eingeschobene Stellung (Figur 3) automatisch mitbewegt wird, bis der Auszugschlitten 20c an den äußeren Anschlag für die ausgezogene Stellung (Figur 4) gelangt, der die Endstellung der vollständig außerhalb des Fahrzeugs befindlichen Energieversorgungseinheit 3 festlegt. In der Figur 4 ist der mitfahrende Weg des teleskopierbaren Anschlagelements 20 mit dem Maß T verdeutlicht.

Da in der ausgefahren Stellung und somit in der ausgezogenen Stellung das Anschlagelement 20 das der Schwenkachse 15 gegenüberliegende Ende des zweiten Abschnitts 12 überragt und über dieses hinausragt, kann die Energieversorgungseinheit 3 vollständig aus dem Batteriefach 2 seitlich neben das Flurförderzeug herausbewegt werden.

Das ausgezogene Anschlagelement 20 definiert hierbei die Endstellung der herausgezogenen Energieversorgungseinheit 3. Bevorzugt sind die an den Längsträgern 20a, 20b angeordneten Haltenasen 30a, 30b, an denen der Batterieblock anschlägt, aus einem dämpfenden Material, beispielsweise Kunststoff, um Beschädigungen an der Energieversorgungseinheit 3 beim Anschlagen an die Haltenasen 30a, 30b zu vermeiden.

Die in der herausgezogenen Stellung gemäß der Figur 4 befindliche Energieversorgungseinheit 3 kann anschließend beispielsweise mittels eines Hallenkrans von der Rollenbahn 10 gehoben und zu einer Ladestation bewegt werden.

Zum Einsetzen einer neuen Energieversorgungseinheit 3 kann die Energieversorgungseinheit 3 beispielsweise mittels eines Krans auf den in der Wechselstellung ausgeklappten zweiten Abschnitt 12, der mittels des in der Abstützstellung verriegelten Stützelements 35 auf der Fahrbahn abgestützt ist, abgestellt werden. Hierbei ist sicherzustellen, dass das Positioniermittel 80 ausgeklappt ist und das Anschlagelement 20 mittels des von den Längsträgern 20a, 20b gebildeten Auszugschlittens 20c zum äußeren Anschlag ausgezogen ist.

Das ausgeklappte Positioniermittel 80 ermöglicht hierbei, die Energieversorgungseinheit 3 beim Absenken auf den ausgeklappten zweiten Abschnitt 12 an die Anschlagplatte 81 angelegt werden kann, so dass die Energieversorgungseinheit 3 mit dem Batteriefach 2 fluchtet und ein Verkanten der Energieversorgungseinheit 3 beim Hineinschieben in das Batteriefach 2 vermieden werden kann.

Anschließend kann die Energieversorgungseinheit 3 in das Batteriefach 2 hineingeschoben werden, wie in der Figur 5 verdeutlicht ist. Daraufhin kann das Positioniermittel 80 - wie durch den Pfeil in der Figur 5 angedeutet ist - eingeklappt werden. Weiterhin kann mittels des Handgriffes 29 der Auszugschlitten 20c und somit das Anschlagelement 20 bis zum inneren Anschlag, bei dem die Fortsätze 67 an die Anschlagflächen 66 des ausgeklappten Stützelements 35 anschlagen, eingeschoben werden. In der Figur 5 ist diese eingeschobene Stellung des Anschlagelements 20 dargestellt, bei dem sich der Auszugschlitten 20c am inneren Anschlag befindet.

Daraufhin kann der zweite Abschnitt 12 mittels der Handhabungseinrichtung 55 in die Betriebsstellung hochgeklappt werden. In den Figuren ist eine Kraftunterstützungseinrichtung 90, beispielsweise eine Gasfeder, gezeigt, die das Hochklappen des zweiten Abschnitts 12 unterstützt.

Zum anschließenden Einklappen des Stützelements 35 ist das Stützelement 35 an der Handhabungseinrichtung 55 nach oben zu ziehen, um die Verriegelung 40 zu entlasten. Hierdurch kann der Entriegelungsknopf 51 betätigt werden, um die Rastverbindung der Abstützstrebe 41 und somit die Verriegelung 40 zu entriegeln, wodurch das Stützelement 35 über die Handhabungseinrichtung 55 abgesenkt und eingeklappt werden kann. Hierdurch wird eine Zweihandbedienung erzielt, die ein sicheres Einklappen des Stützelements 35 in die eingeklappte Stellung ermöglicht.

Beim Einklappen des Stützelements 35 gleitet das Anschlagelement 20 vollständig in den zweiten Abschnitt 12 und somit in die Verriegelungsstellung, wobei die Haltenasen 30a, 30b mit den Verriegelungsausnehmungen 31a, 31b die Oberkante der Seitenwand der Energieversorgungseinheit 3 hintergreifen und den zweiten Abschnitt 12 in der eingeklappten Stellung an der Energieversorgungseinheit 3 verriegeln. Dabei greifen die Fortsätze 62 an der Innenseite des Stützelements 35 in die Ausnehmungen 61 an den Längsträgers 20a, 20b und bilden die Verriegelung 60 des Auszugschlittens 20c.

Die erfindungsgemäße von dem zweiten Abschnitt 12 gebildete Batteriebrücke weist eine Reihe von Vorteilen auf.

Die Verriegelung 60 schließt Fehlbedienungen aus und stellt in Verbindung mit den Verriegelungsausnehmungen 31a, 31b sicher, dass der zweite Abschnitt 12 nur in die Wechselstellung heruntergeklappt werden kann, wenn sich das Stützelement 35 in der ausgeklappten und verriegelten Abstützstellung befindet. Die Verriegelung 60 stellt weiterhin sicher, dass das Anschlagelement 20 nur dann in die äußere Stellung ausziehbar ist, wenn das Stützelement 35 in die Abstützstellung ausgeklappt wurde. Zudem stellt die Verriegelung 60 sicher, dass das Stützelement 35 nur dann in die eingeklappte Stellung eingeklappt werden kann, wenn sich das Anschlagelement 20 in der Verriegelungsstellung befindet.

Die Zweihandbedienung zum Lösen der Verriegelung 40 des ausgeklappten Stützelements 35 ermöglicht ein sicheres Einklappen des Stützelements 35 in die eingeklappte Stellung.

Der teleskopierbare Anschlagelement 20 erleichtert das Herausrollen der Energieversorgungseinheit 3 aus dem Batteriefach 2, wobei keine zusätzlichen Bedienungsschritte von der Bedienungsperson erforderlich sind, da das Anschlagelement 20 durch die Bewegung der Energieversorgungseinheit 3 an den äußeren Anschlag für die ausgezogenen Stellung mitbewegt wird. Nach dem Einschieben einer Energieversorgungseinheit 3 in das Batteriefach 2 kann über den Handgriff 29 das Anschlagelement 20 auf einfache und in ergonomisch günstiger Weise an den inneren Anschlag für die eingeschobene Stellung betätigt werden.

Mit der erfindungsgemäßen klappbaren Batteriebrücke kann somit ein vor Fehlbedienungen sicherer Wechsel der Energieversorgungseinheit 3 in ergonomisch günstiger und schneller Weise erzielt werden.

## Patentansprüche

1. Flurförderzeug, insbesondere Gegengewichtsgabelstapler, mit einem Rahmen (1) und einer innerhalb des Rahmens (1) in einem Batteriefach (2) angeordneten Energieversorgungseinheit (3), wobei der Rahmen (1) mit einer seitlichen Öffnung (7) versehen ist und die Energieversorgungseinheit (3) durch die seitliche Öffnung (7) in horizontaler Richtung relativ zu dem Batteriefach (2) bewegbar ist, wobei zur Bewegung der Energieversorgungseinheit (3) eine mehrteilige Rollenbahn (10) vorgesehen ist, die einen an einer Bodenfläche des Batteriefachs (2) angeordneten ersten Abschnitt (11) und einen zweiten Abschnitt (12) zum vollständigen Herausbewegen der Energersorgungseinheit (3) aus dem Batteriefach (2) umfasst, wobei der zweite Abschnitt (12) der Rollenbahn (10) im Bereich der seitlichen Öffnung (7) um eine im Wesentlichen horizontale Schwenkachse zwischen einer eingeklappten Betriebsstellung und einer ausgeklappten Wechselstellung am Flurförderzeug schwenkbar befestigt ist, **dadurch gekennzeichnet, dass** der zweite Abschnitt (12) der Rollenbahn (10) mit einem Anschlagelement (20) versehen ist, das an dem zweiten Abschnitt (12) der Rollenbahn (10) zwischen einer eingeschobenen Stellung und einer ausgezogenen Stellung in Längsrichtung des zweiten Abschnitts (12) längsverschiebbar und teleskopierbar angeordnet ist, und in der ausgezogenen Stellung die Endstellung der sich außerhalb des Batteriefachs (2) befindlichen Energieversorgungseinheit (3) festlegt.

2. Flurförderzeug nach Anspruch 1, **dadurch gekennzeichnet, dass** das Anschlagelement (20) zwischen einem inneren Anschlag (65) für die eingeschobene Stellung und einem äußeren Anschlag für die ausgezogene Stellung teleskopierbar an dem zweiten Abschnitt (12) längsverschiebbar ist, wobei sich das Anschlagelement (20) in der eingeschobenen Stellung im Wesentlichen innerhalb der Längserstreckung des zweiten Abschnitts (12) befindet und in der ausgezogenen Stellung das der Schwenkachse (15) gegenüberliegende Ende des zweiten Abschnitts (12) der Rollenbahn (10) in Längsrichtung überragt.

3. Flurförderzeug nach Anspruch 1 oder 2, **dadurch gekennzeichnet, dass** an dem Anschlagelement (20) ein Handgriff (29) angeordnet ist.

4. Flurförderzeug nach einem der Ansprüche 1 bis 3, **dadurch gekennzeichnet, dass** das Anschlagelement (20) mit einem Auszugschlitten (20c) in Wirkverbindung ist, der beim Herausbewegen der Energieversorgungseinheit (3) aus dem Batteriefach (2) von dem inneren Anschlag zu dem äußeren Anschlag in dem zweiten Abschnitt (12) teleskopierbar mitbewegbar ist.

5. Flurförderzeug nach einem der Ansprüche 2 bis 4, **dadurch gekennzeichnet, dass** der äußere Anschlag für die ausgezogene Stellung des Anschlagelements (20) zwischen dem Anschlagelement (20) bzw. dem Auszugschlitten (20c) und dem zweiten Abschnitt (12) gebildet ist.

6. Flurförderzeug nach einem der Ansprüche 1 bis 5, **dadurch gekennzeichnet, dass** das Anschlagelement (20) von mindestens einem Längsträger (20a; 20b) gebildet ist, der in einem Führungskanal (21a; 21b) des zweiten Abschnitts (12) der Rollenbahn (10) längsverschiebbar gelagert ist.

7. Flurförderzeug nach einem der Ansprüche 1 bis 6, **dadurch gekennzeichnet, dass** das Anschlagelement (20) im Bereich eines Anschlagmittels (28a; 28b) für die Energieversorgungseinheit (3) mit einer Verriegelungsausnehmung (31 a; 31 b) versehen ist, die in der eingeklappten Stellung des zweiten Abschnitts (12) der Rollenbahn (10) und in einer angrenzend an die eingeschobenen Stellung ausgebildeten Verriegelungsstellung des Anschlagelements (20) eine Verriegelung des eingeklappten zweiten Abschnitts (12) an der Energieversorgungseinheit (3) ermöglicht.

8. Flurförderzeug nach einem der Ansprüche 1 bis 7, **dadurch gekennzeichnet, dass** der zweite Abschnitt (12) der Rollenbahn (10) mit einem Stützelement (35) versehen ist, das an dem zweiten Abschnitt (12) der Rollenbahn (10) an dem der Schwenkachse (15) gegenüberliegende Bereich schwenkbar, insbesondere um eine im Wesentlichen horizontale Schwenkachse (36) klappbar, angeordnet ist.

9. Flurförderzeug nach Anspruch 8, **dadurch gekennzeichnet, dass** das Stützelement (35) in einer ausgeklappten Abstützstellung mittels einer Verriegelungseinrichtung (40) an dem zweiten Abschnitt (12) der Rollenbahn (10) verriegelbar ist.

10. Flurförderzeug nach Anspruch 8 oder 9, dadurch gekennzeichet, dass das Stützelement (35) mit einer Abstützstrebe (41) versehen ist, die in einer ausgeklappten Abstützstellung des Stützelements (35) mittels eines Rasthakens (42) in einer Rastausnehmung (43) des zweiten Abschnitts (12) der Rollenbahn (10) verriegelnd einrastet.

11. Flurförderzeug nach Anspruch 9 oder 10, **dadurch gekennzeichnet, dass** zum Einklappen des Stützelements (35) die Verriegelungseinrichtung (40) mit einer Entriegelungsvorrichtung (50) entriegelbar ist.

12. Flurförderzeug nach Anspruch 11, **dadurch gekennzeichnet, dass** die Entriegelungsvorrichtung (50) einen Entriegelungsknopf (51) umfasst, der mit der Abstützstrebe (41) in Wirkverbindung steht.

13. Flurförderzeug nach Anspruch 12, **dadurch gekennzeichnet, dass** zum Lösen der Verriegelungseinrichtung (50) eine Zweihandbetätigung vorgesehen ist, wobei das Stützelement (35) mit einer Hand in der ausgeklappten Abstützstellung gehalten werden muss, um durch eine Entlastung der Abstützstrebe (41) bei einer Betätigung des Entriegelungsknopfes (51) mit der zweiten Hand die Rastverbindung zu lösen.

14. Flurförderzeug nach einem der Ansprüche 8 bis 13, **dadurch gekennzeichnet, dass** an dem Stützelement (35) eine Handhabungseinrichtung (55), insbesondere ein Gurtband, angeordnet ist.

15. Flurförderzeug nach einem der Ansprüche 8 bis 14, **dadurch gekennzeichnet, dass** in der eingeschobenen Stellung bzw. der Verriegelungsstellung des Anschlagelements (20) und in der eingeklappten Stellung des Stützelements (35) zwischen dem Stützelement (35) und dem Anschlagelement (20) eine Verriegelung (60) gebildet ist, die ein Ausziehen des Anschlagelements (20) in Richtung der ausgezogenen Stellung verhindert.

16. Flurförderzeug nach Anspruch 15, **dadurch gekennzeichnet, dass** die Verriegelung (60) eine Aussparung (61) in dem Anschlagelement (20) bzw. in dem Auszugschlitten (20c) umfasst, in die das eingeklappte Stützelement (35) mit einem Fortsatz (62) eingreift.

17. Flurförderzeug nach einem der Ansprüche 8 bis 16, **dadurch gekennzeichnet, dass** der innere Anschlag (65) für die eingeschobene Stellung des Anschlagelements (20) zwischen dem Anschlagelement (20) bzw. dem Auszugschlitten (20c) und dem ausgeklappten Stützelement (35) ausgebildet ist.

18. Flurförderzeug nach Anspruch 17, **dadurch gekennzeichnet, dass** der innere Anschlag (65) eine Anschlagfläche (66) an dem Stützelement (35) umfasst, an der das Anschlagelement (20) bzw. der Auszugschlitten (20c) mit einem Fortsatz (67) anschlägt.

19. Flurförderzeug nach einem der Ansprüche 1 bis 18, **dadurch gekennzeichnet, dass** an dem zweiten Abschnitt (12) der Rollenbahn (10) ein Positioniermittel (80) zur seitlichen Führung der Energieversorgungseinheit (3) angeordnet ist.

20. Flurförderzeug nach Anspruch 19, **dadurch gekennzeichnet, dass** das Positioniermittel (80) von einem ein- und ausklappbaren Anschlagblech (81) gebildet ist, das an einer Seite des zweiten Abschnitts (12) um eine sich in Längsrichtung des zweiten Abschnitts (12) erstreckende Klappachse (82) klappbar angeordnet ist.

## Claims

1. Industrial truck, in particular counterbalance forklift truck, with a frame (1) and a power supply unit (3) arranged within the frame (1) in a battery compartment (2), the frame (1) being provided with a lateral opening (7), and the power supply unit (3) being movable in the horizontal direction relative to the battery compartment (2) through the lateral opening (7), a multi-part roller track (10) being provided for moving the power supply unit (3), said roller track comprising a first section (11) arranged on a base area of the battery compartment (2) and a second section (12) for moving the power supply unit (3) completely out of the battery compartment (2), the second section (12) of the roller track (10) being fastened pivotably on the industrial truck in the region of the lateral opening (7) about a substantially horizontal pivot axis between a folded-in operating position and a folded-out replacement position, **characterized in that** the second section (12) of the roller track (10) is provided with a stop element (20), which is arranged on the second section (12) of the roller track (10) telescopically and longitudinally displaceably in the longitudinal direction of the second section (12) between a pushed-in position and a withdrawn position, and in the withdrawn position, fixes the final position of the power supply unit (3) located outside the battery compartment (2).

2. Industrial truck according to Claim 1, **characterized in that** the stop element (20) is longitudinally displaceable telescopically on the second section (12) between an inner stop (65) for the pushed-in position and an outer stop for the withdrawn position, the stop element (20) in the pushed-in position being located substantially within the longitudinal extent of the second section (12) and, in the withdrawn position, protruding beyond that end of the second section (12) of the roller track (10) which is opposite the pivot axis (15) in the longitudinal direction.

3. Industrial truck according to Claims 1 or 2, **characterized in that** a handle (29) is arranged on the stop element (20).

4. Industrial truck according to one of Claim 1 to 3, **characterized in that** the stop element (20) is operatively connected to a pull-out sliding block (20c), which can be moved along telescopically when the power supply unit (3) is moved out of the battery compartment (2) from the inner stop to the outer stop in the second section (12).

5. Industrial truck according to one of Claims 2 to 4, **characterized in that** the outer stop for the withdrawn position of the stop element (20) is formed between the stop element (20) or the pull-out sliding block (20c) and the second section (12).

6. Industrial truck according to one of Claims 1 to 5, **characterized in that** the stop element (20) is formed by at least one longitudinal mount (20a; 20b), which is mounted longitudinally displaceably in a guide channel (21a; 21b) of the second section (12) of the roller track (10).

7. Industrial truck according to one of Claims 1 to 6, **characterized in that** the stop element (20) is provided with a locking recess (31a; 31b) in the region of a stop means (28a; 28b) for the power supply unit (3), said locking recess, in the folded-in position of the second section (12) of the roller track (10) and in a locking position, formed adjacently to the pushed-in position, of the stop element (20), enables locking of the folded-in second section (12) on the power supply unit (3).

8. Industrial truck according to one of Claims 1 to 7, **characterized in that** the second section (12) of the roller track (10) is provided with a supporting element (35), which is arranged pivotably, in particular such that it can be folded about a substantially horizontal pivot axis (36), on the second section (12) of the roller track (10) in the region opposite the pivot axis (15).

9. Industrial truck according to Claim 8, **characterized in that** the supporting element (35) is lockable in a folded-out support position by means of a locking device (40) on the second section (12) of the roller track (10).

10. Industrial truck according to Claim 8 or 9, **characterized in that** the supporting element (35) is provided with a supporting strut (41), which latches in locking fashion by means of a latching hook (42) in a latching recess (43) in the second section (12) of the roller track (10), in a folded-out support position of the supporting element (35).

11. Industrial truck according to Claim 9 or 10, **characterized in that**, in order to fold in the supporting element (35), the locking device (40) is unlockable with an unlocking apparatus (50).

12. Industrial truck according to Claim 11, **characterized in that** the unlocking apparatus (50) comprises an unlocking button (51), which is operatively connected to the supporting strut (41).

13. Industrial truck according to Claim 12, **characterized in that**, in order to release the locking device (40), two-handed actuation is intended, wherein the supporting element (35) needs to be held with a hand in the folded-out support position in order to release the latching connection by relieving the load on the supporting strut (41) on actuation of the unlocking button (51) with the other hand.

14. Industrial truck according to one of Claims 8 to 13, **characterized in that** a handling device (55), in particular a strap, is arranged on the supporting element (35).

15. Industrial truck according to one of Claims 8 to 14, **characterized in that**, in the pushed-in position or the locking position of the stop element (20) and in the folded-in position of the supporting element (35), a lock (60) is formed between the supporting element (35) and the stop element (20) and prevents the stop element (20) from being withdrawn in the direction of the withdrawn position.

16. Industrial truck according to Claim 15, **characterized in that** the lock (60) comprises a cutout (61) in the stop element (20) or in the pull-out sliding block (20c), into which cutout the folded-in supporting element (35) engages with a protrusion (62).

17. Industrial truck according to one of Claims 8 to 16, **characterized in that** the inner stop (65) for the pushed-in position of the stop element (20) is formed between the stop element (20) or the pull-out sliding block (20c) and the folded-out supporting element (35).

18. Industrial truck according to Claim 17, **characterized in that** the inner stop (65) comprises a stop face (66) at the supporting element (35), against which stop face the stop element (20) or the pull-out sliding block (20c) with a protrusion (67) stops.

19. Industrial truck according to one of Claims 1 to 18, **characterized in that** a positioning means (80) for laterally guiding the power supply unit (3) is arranged on the second section (12) of the roller track (10).

20. Industrial truck according to Claim 19, **characterized in that** the positioning means (80) is formed by a stop plate (81) which can be folded in and out and which is arranged on one side of the second section (12) in such a way that it can be folded about a folding axis (82) extending in the longitudinal direction of the second section (12).

## Revendications

1. Chariot de manutention, notamment gerbeur à fourche à contrepoids, comprenant un châssis (1) et une unité d'alimentation en énergie (3) disposée à l'intérieur du châssis (1) dans un compartiment de batterie (2), le châssis (1) étant muni d'une ouverture latérale (7) et l'unité d'alimentation en énergie (3) pouvant être déplacée à travers l'ouverture latérale (7) dans le sens horizontal par rapport au compartiment de batterie (2), un train de rouleaux (10) en plusieurs parties étant prévu pour le déplacement de l'unité d'alimentation en énergie (3), lequel comprend une première section (11) disposée sur une surface de sol du compartiment de batterie (2) et une deuxième section (12) pour sortir complètement l'unité d'alimentation en énergie (3) hors du compartiment de batterie (2), la deuxième section (12) du train de rouleaux (10) étant fixée sur le chariot de manutention dans la zone de l'ouverture latérale (7) de manière à pouvoir pivoter autour d'un axe de pivotement essentiellement horizontal entre une position de fonctionnement rabattue vers l'intérieur et une position de changement rabattue vers l'extérieur, **caractérisé en ce que** la deuxième section (12) du train de rouleaux (10) est munie d'un élément de butée (20) qui est disposé sur la deuxième section (12) du train de rouleaux (10) de manière à pouvoir coulisser en longueur et de manière télescopique entre une position rentrée et une position sortie dans le sens de la longueur de la deuxième section (12), et qui, dans la position sortie, définit la position finale de l'unité d'alimentation en énergie (3) se trouvant en dehors du compartiment de batterie (2).

2. Chariot de manutention selon la revendication 1, **caractérisé en ce que** l'élément de butée (20) peut coulisser en longueur de manière télescopique sur la deuxième section (12) entre une butée intérieure (65) pour la position rentrée et une butée extérieure pour la position sortie, l'élément de butée (20) en position rentrée se trouvant pour l'essentiel à l'intérieur de l'étendue longitudinale de la deuxième section (12) et, en position sortie, dépassant dans le sens de la longueur de l'extrémité opposée à l'axe de pivotement (15) de la deuxième section (12) du train de rouleaux (10).

3. Chariot de manutention selon la revendication 1 ou 2, **caractérisé en ce qu'**une poignée (29) est disposée sur l'élément de butée (20).

4. Chariot de manutention selon l'une des revendications 1 à 3, **caractérisé en ce que** l'élément de butée (20) est en liaison active avec un chariot d'extraction (20c) qui peut accompagner le mouvement de manière télescopique entre la butée intérieure et la butée extérieure dans la deuxième section (12) lors de la sortie de l'unité d'alimentation en énergie (3) hors du compartiment de batterie (2).

5. Chariot de manutention selon l'une des revendications 2 à 4, **caractérisé en ce que** la butée extérieure pour la position sortie de l'élément de butée (20) est formée entre l'élément de butée (20) ou le chariot d'extraction (20c) et la deuxième section (12).

6. Chariot de manutention selon l'une des revendications 1 à 5, **caractérisé en ce que** l'élément de butée (20) est formé par au moins un longeron (20a ; 20b) qui est logé de manière à pouvoir coulisser en longueur dans un canal de guidage (21a ; 21b) de la deuxième section (12) du train de rouleaux (10).

7. Chariot de manutention selon l'une des revendications 1 à 6, **caractérisé en ce que** l'élément de butée (20) est muni dans la zone d'un moyen de butée (28a ; 28b) pour l'unité d'alimentation en énergie (3) d'un évidement de verrouillage (31a ; 31b) qui, dans la position rabattue vers l'intérieur de la deuxième section (12) du train de rouleaux (10) et dans une position de verrouillage de l'élément de butée (20) réalisée de manière adjacente à la position rentrée, permet un verrouillage à l'unité d'alimentation en énergie (3) de la deuxième section (12) rabattue vers l'intérieur.

8. Chariot de manutention selon l'une des revendications 1 à 7, **caractérisé en ce que** la deuxième section (12) du train de rouleaux (10) est munie d'un élément d'appui (35) qui est disposé de manière à pouvoir pivoter sur la deuxième section (12) du train de rouleaux (10), dans la zone à l'opposé de l'axe de pivotement (15), notamment de manière à pouvoir être rabattu autour d'un axe de pivotement (36) essentiellement horizontal.

9. Chariot de manutention selon la revendication 8, **caractérisé en ce que** l'élément d'appui (35), dans une position d'appui rabattue vers l'extérieur, est verrouillable à la deuxième section (12) du train de rouleaux (10) au moyen d'un dispositif de verrouillage (40).

10. Chariot de manutention selon la revendication 8 ou 9, **caractérisé en ce que** l'élément d'appui (35) est muni d'un montant d'appui (41) qui, dans une position d'appui rabattue vers l'extérieur de l'élément d'appui (35), s'encliquète avec verrouillage au moyen d'un crochet d'encliquetage (42) dans un évidement d'encliquetage (43) de la deuxième section (12) du train de rouleaux (10).

11. Chariot de manutention selon la revendication 9 ou 10, **caractérisé en ce que** pour rabattre l'élément d'appui (35) vers l'intérieur, le dispositif de verrouillage (40) peut être déverrouillé avec un dispositif de déverrouillage (50).

12. Chariot de manutention selon la revendication 11, **caractérisé en ce que** le dispositif de déverrouillage (50) comprend un bouton de déverrouillage (51) qui est en liaison active avec le montant d'appui (41).

13. Chariot de manutention selon la revendication 12, **caractérisé en ce qu'**un actionnement à deux mains est prévu pour libérer le dispositif de verrouillage (40), l'élément d'appui (35) devant être tenu avec une main dans la position d'appui rabattue vers l'extérieur afin de libérer la liaison encliquetée par un soulagement du montant d'appui (41) lors de l'actionnement du bouton de déverrouillage (51) avec la deuxième main.

14. Chariot de manutention selon l'une des revendications 8 à 13, **caractérisé en ce qu'**un dispositif de maniement (55), notamment une sangle, est disposé sur l'élément d'appui (35).

15. Chariot de manutention selon l'une des revendications 8 à 14, **caractérisé en ce que** dans la position rentrée ou dans la position verrouillée de l'élément de butée (20) et dans la position rabattue vers l'intérieur de l'élément d'appui (35), un verrouillage (60) est formé entre l'élément d'appui (35) et l'élément de butée (20), lequel empêche une extraction de l'élément de butée (20) en direction de la position sortie.

16. Chariot de manutention selon la revendication 15, **caractérisé en ce que** le verrouillage (60) comprend un évidement (61) dans l'élément de butée (20) ou dans le chariot d'extraction (20c), dans lequel l'élément d'appui (35) rabattu vers l'intérieur vient en prise avec un prolongement (62).

17. Chariot de manutention selon l'une des revendications 8 à 16, **caractérisé en ce que** la butée intérieure (65) pour la position rentrée de l'élément de butée (20) est formée entre l'élément de butée (20) ou le chariot d'extraction (20c) et l'élément d'appui (35) rabattu vers l'extérieur.

18. Chariot de manutention selon la revendication 17, **caractérisé en ce que** la butée intérieure (65) comprend une surface d'arrêt (66) sur l'élément d'appui (35), sur laquelle l'élément de butée (20) ou le chariot d'extraction (20c) vient heurter avec un prolongement (67).

19. Chariot de manutention selon l'une des revendications 1 à 18, **caractérisé en ce qu'**un moyen de positionnement (80) pour le guidage latéral de l'unité d'alimentation en énergie (3) est disposé sur la deuxième section (12) du train de rouleaux (10).

20. Chariot de manutention selon la revendication 19, **caractérisé en ce que** le moyen de positionnement (80) est formé par une tôle de butée (81) pouvant être rabattue vers l'intérieur et l'extérieur, laquelle est disposée de manière rabattable sur un côté de la deuxième section (12) autour d'un axe de rabattage (82) qui s'étend dans le sens longitudinal de la deuxième section (12).
